# EUROPEAN PATENT APPLICATION

(11) **EP 4 686 383 A1**
(43) Date of publication of application: **04.02.2026**
(21) Application number: 25191597.1
(22) Date of filing: 24.07.2025
(51) Int. Cl.: A01B 69/00, A01B 69/04

(54) **SWATH RECORDATION SYSTEM FOR A VEHICLE**

(30) Priority: 31.07.2024 US 202418790322
(71) Applicant: CNH Industrial America LLC, New Holland, PA 17557 (US)
(72) Inventor: Garber, Grant, New Holland, 17557 (US)
(74) Representative: CNH Industrial IP Department

(57) **Abstract**

A method of determining a crop yield of a field worked by an agricultural vehicle includes receiving, from a sensor of the agricultural vehicle, sensor data associated with at least one parameter of a swath of a plant material formed by the agricultural vehicle in the field. The method further includes receiving, from a location sensor, location data indicative of a location of the swath of the plant material. The method further includes generating, based on the sensor data and the location data, the swath parameter map indicating the at least one parameter of the swath of the plant material at the location of the swath of the plant material.

## Description

### BACKGROUND

The present disclosure relates generally to vehicles. More specifically, the present disclosure relates to vehicles with agricultural applications.

Certain agricultural vehicles, such as windrowers, are used to harvest crops, such as hay, alfalfa, or legumes, by cutting the crops in preparation for removal. The agricultural vehicles may form the crops into swaths. Another agricultural vehicle, such as a baler, gathers the crops. In order for the other agricultural vehicle to gather the crops, various information associated with the swaths may be known. Accordingly, it may be desirable to record the information associated with the swaths when the swaths of the crops are formed so that the information can be shared with the other agricultural vehicle to increase efficiency while gathering the crops.

### SUMMARY

One embodiment relates to a method of generating a swath parameter map of a field worked by an agricultural vehicle. The method includes receiving, from a sensor of the agricultural vehicle, sensor data associated with at least one parameter of a swath of a plant material formed by the agricultural vehicle in the field. The method also includes receiving, from a location sensor, location data indicative of a location of the swath of the plant material. The method also includes generating, based on the sensor data and the location data, the swath parameter map indicating the at least one parameter of the swath of the plant material at the location of the swath of the plant material.

Another embodiment relates to a non-transitory computer-readable medium having instructions stored thereon that, when executed by one or more processors, cause the one or more processors to implement operations. The operations include receiving, from a sensor of a first vehicle, sensor data associated with at least one parameter of a swath of a plant material formed by the first vehicle in a field. The operations also include receiving, from a location sensor, location data indicative of a location of the swath of the plant material. The operations also include determining, based on the sensor data and the location data, the at least one parameter and the location of the swath of the plant material. The operations also include providing the at least one parameter and the location of the swath of the plant material to a second vehicle configured to perform an operation associated with the swath of the plant material.

Still another embodiment relates to a farming system. The farming system includes an agricultural vehicle and a controller. The agricultural vehicle includes a chassis, a tractive element coupled to the chassis, a drive motor configured to drive the tractive element to propel the agricultural vehicle, and a manipulator coupled to the chassis. The manipulator is configured to perform an operation associated with plant material. The agricultural vehicle further includes a sensor configured to provide sensor data associated with at least one parameter of a swath of the plant material formed by the agricultural vehicle and a location sensor configured to provide location data indicative of a current location of the agricultural vehicle. The controller is operatively coupled to the sensor and the location sensor. The controller is configured to determine, based on the sensor data and the location data, at least one first parameter associated with a first swath of the plant material at a first location and determine, based on the sensor data and the location data, at least one second parameter associated with a second swath of the plant material at a second location.

### BRIEF DESCRIPTION OF THE DRAWINGS

FIG. 1 is a perspective view of a vehicle, according to an exemplary embodiment.
FIG. 2 is a schematic block diagram of the vehicle of FIG. 1, according to an exemplary embodiment.
FIG. 3 is a schematic block diagram of a driveline of the vehicle of FIG. 1, according to an exemplary embodiment.
FIG. 4 is a perspective section view of a header of the vehicle of FIG. 1, according to an exemplary embodiment.
FIG. 5 is another perspective section view of the header of FIG. 4.
FIG. 6 is a perspective view of a flail roller for use with the header of FIG. 4, according to an exemplary embodiment.
FIG. 7 is a block diagram of a control system including the vehicle of FIG. 1, according to an exemplary embodiment.
FIG. 8 is a screenshot of a swath parameter map generated by the control system of FIG. 7, according to an exemplary embodiment.
FIG. 9 is a flow diagram of a process for generating a swath parameter map of swaths of plant material formed by a vehicle in a field, according to an exemplary embodiment.

### DETAILED DESCRIPTION

According to an exemplary embodiment, a vehicle system of the present disclosure facilitates determining parameters and locations of swaths of plant material in a field. The vehicle system includes an agricultural vehicle configured to form the swaths of plant material. In some embodiments, the agricultural vehicle may be configured as a windrower configured to cut the plant material, collect the plant material, condition the plant material, and distribute the plant material into the swaths of the plant material in the field to form the swaths of the plant material. In other embodiments, the agricultural vehicle may be configured as a tractor that includes and/or is towing a merger configured to gather the plant material in the field and merge the plant material into the swaths of the plant material to form the swaths of the plant material, a tractor that includes and/or is towing a rake configured to rake the plant material in the field into the swaths of the plant material to form the swaths of the plant material, a tractor that includes and/or is towing a tedder configured to spread and fluff the swaths of the plant material in the field to form the swaths of the plant material, etc. The parameters and the locations of the swaths of the plant material may be used by a controller to generate a swath parameter map indicating the parameters of the swaths of the plant material at the locations of the plant material. The parameters and the locations of the swaths of the plant material and/or the swath parameter map may be provided to another agricultural vehicle configured to perform another operation associated with the swaths of the plant material to assist with planning the other operation of the other agricultural vehicle.

### Overall Vehicle

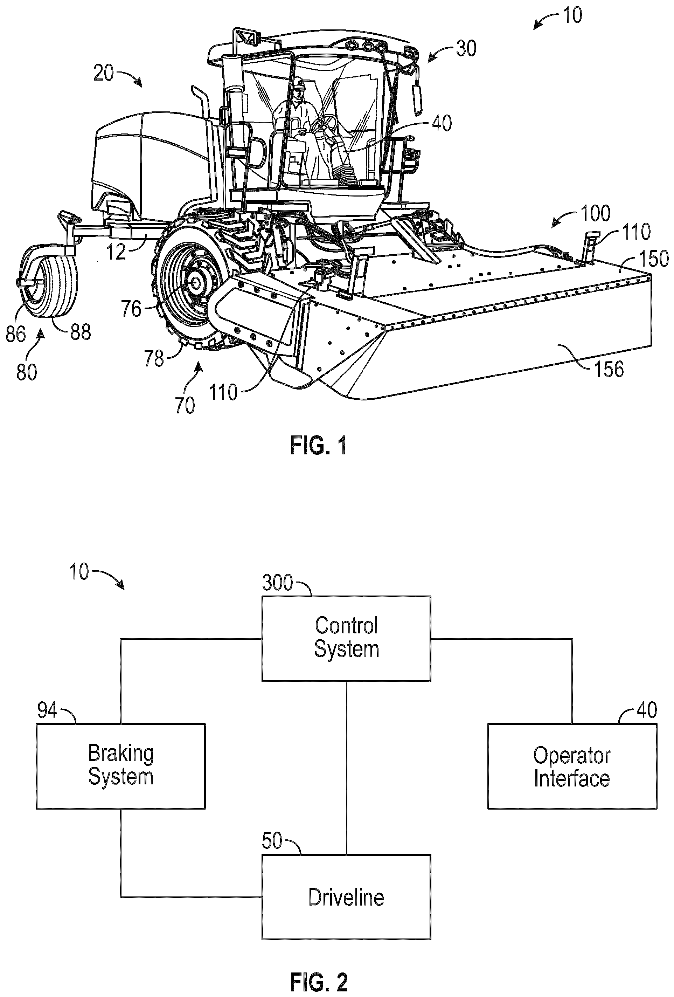

According to the exemplary embodiment shown in FIGS. 1-3, a machine or vehicle, shown as vehicle 10, includes a chassis, shown as frame 12; a body assembly, shown as body 20, coupled to the frame 12 and having an occupant portion or section, shown as cab 30; operator input and output devices, shown as operator interface 40, that are disposed within the cab 30; a drivetrain, shown as driveline 50, coupled to the frame 12 and at least partially disposed under the body 20; a vehicle braking system, shown as braking system 94, coupled to one or more components of the driveline 50 to facilitate selectively braking the one or more components of the driveline 50; and a vehicle control system or vehicle system, shown as control system 300, coupled to the operator interface 40, the driveline 50, and the braking system 94. In other embodiments, the vehicle 10 includes more or fewer components.

The chassis of the vehicle 10 may include a structural frame (e.g., the frame 12) formed from one or more frame members coupled to one another (e.g., as a weldment). Additionally or alternatively, the chassis may include a portion of the driveline 50. By way of example, a component of the driveline 50 (e.g., the transmission 56) may include a housing of sufficient thickness to provide the component with strength to support other components of the vehicle 10.

According to an exemplary embodiment, the vehicle 10 is an off-road machine or vehicle. As shown in FIG. 1, the vehicle 10 is an agricultural machine, and more specifically a windrower. In other embodiments, the off-road machine or vehicle is an agricultural machine or vehicle such as a tractor, a telehandler, a front loader, a combine harvester, a grape harvester, a forage harvester, a sprayer vehicle, and/or another type of agricultural machine or vehicle. In other embodiments, the off-road machine or vehicle is a construction machine or vehicle such as a skid steer loader, an excavator, a backhoe loader, a wheel loader, a bulldozer, a telehandler, a motor grader, and/or another type of construction machine or vehicle. In other embodiments, the vehicle 10 includes one or more attached implements and/or trailed implements such as a front mounted mower, a rear mounted mower, a trailed mower, a tedder, a rake, a baler, a plough, a cultivator, a rotavator, a tiller, a harvester, and/or another type of attached implement or trailed implement.

According to an exemplary embodiment, the cab 30 is configured to provide seating for an operator (e.g., a driver, etc.) of the vehicle 10. In some embodiments, the cab 30 is configured to provide seating for one or more passengers of the vehicle 10. According to an exemplary embodiment, the operator interface 40 is configured to provide an operator with the ability to control one or more functions of and/or provide commands to the vehicle 10 and the components thereof (e.g., turn on, turn off, drive, turn, brake, engage various operating modes, raise/lower an implement, etc.). The operator interface 40 may include one or more displays and one or more input devices. The one or more displays may be or include a touchscreen, an LCD display, a LED display, a speedometer, gauges, warning lights, etc. The one or more input device may be or include a steering wheel, a joystick, buttons, switches, knobs, levers, an accelerator pedal, a brake pedal, etc.

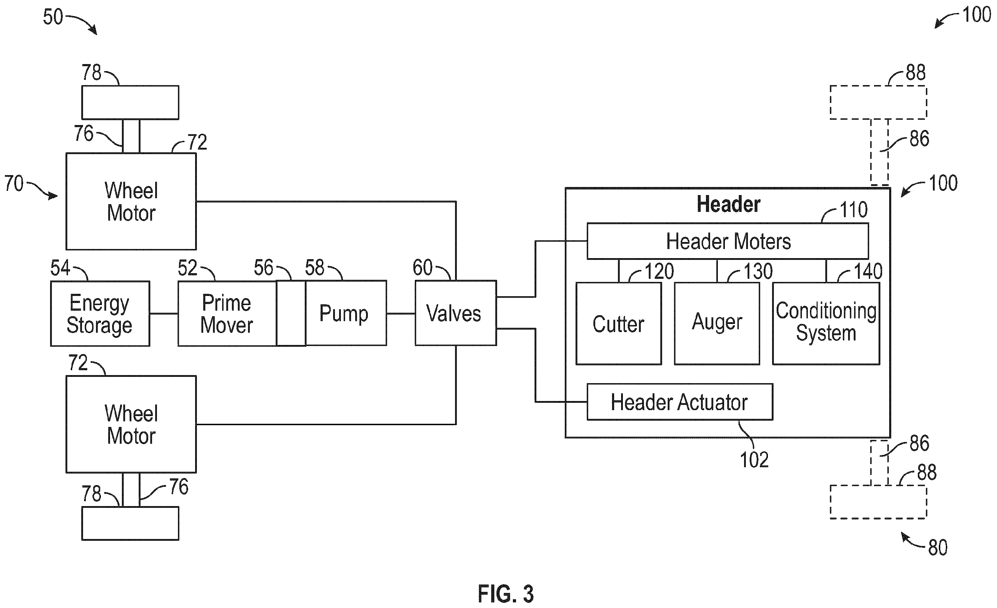

According to an exemplary embodiment, the driveline 50 is configured to propel the vehicle 10. As shown in FIG. 3, the driveline 50 includes a primary driver, shown as prime mover 52, and an energy storage device, shown as energy storage 54. In some embodiments, the driveline 50 is a conventional driveline whereby the prime mover 52 is an internal combustion engine and the energy storage 54 is a fuel tank. The internal combustion engine may be a spark-ignition internal combustion engine or a compression- ignition internal combustion engine that may use any suitable fuel type (e.g., diesel, ethanol, gasoline, natural gas, propane, etc.). In some embodiments, the driveline 50 is an electric driveline whereby the prime mover 52 is an electric motor and the energy storage 54 is a battery system. In some embodiments, the driveline 50 is a fuel cell electric driveline whereby the prime mover 52 is an electric motor and the energy storage 54 is a fuel cell (e.g., that stores hydrogen, which produces electricity from the hydrogen, etc.). In some embodiments, the driveline 50 is a hybrid driveline whereby (i) the prime mover 52 includes an internal combustion engine and an electric motor/generator and (ii) the energy storage 54 includes a fuel tank and/or a battery system.

As shown in FIG. 3, the driveline 50 includes a transmission device (e.g., a gearbox, a continuous variable transmission ("CVT"), etc.), shown as transmission 56, coupled to the prime mover 52; a hydraulic pump or source of pressurized fluid, shown as pump 58; one or more flow control devices, shown as valves 60; a first tractive assembly, shown as front tractive assembly 70; and a second tractive assembly, shown as rear tractive assembly 80. The transmission 56 couples an output of the prime mover 52 to the pump 58. According to an exemplary embodiment, the transmission 56 has a variety of configurations (e.g., gear ratios, etc.) and provides different output speeds relative to a mechanical input received thereby from the prime mover 52. In some embodiments (e.g., in electric driveline configurations, in hybrid driveline configurations, etc.), the driveline 50 does not include the transmission 56. In such embodiments, the prime mover 52 may be directly coupled to the pump 58. In response to receiving a mechanical energy input, the pump 58 provides a flow of pressurized fluid (e.g., hydraulic oil) to the valves 60. By way of example, the pump 58 may receive fluid from a low pressure source (e.g., a reservoir) and provides the fluid at an elevated pressure. The valves 60 control the flow of the pressurized fluid throughout the vehicle 10. The valves 60 may control the flow rate, flow direction, and/or pressure of the fluid. The valves 60 may include actively controlled valves (e.g., solenoid valves, directional control valves, etc.) and/or passive valves (e.g., check valves, pressure relief valves, etc.).

The front tractive assembly 70 includes a pair of hydraulic motors or drive motors, shown as wheel motors 72. Each wheel motor 72 is coupled to a first axle, shown front axle 76, which is in turn coupled to a tractive element, shown as front tractive element 78. Each wheel motor 72 is fluidly coupled to the valves 60, such that the valves 60 provide pressurized fluid to the wheel motors 72. In response, the wheel motors 72 drive rotation of the front tractive elements 78. The valves 60 may drive the wheel motors 72 independently. By way of example, the valves 60 may drive both wheel motors 72 at the same speed and in the same direction to propel the vehicle 10 straight (e.g., forward or backward). By way of another example, the valves 60 may drive the wheel motors 72 differently (e.g., in different directions, at different speeds, etc.) to cause the vehicle 10 to turn.

As shown in FIGS. 1 and 3, the rear tractive assembly 80 includes a pair of a second axles, shown rear axles 86; and a second pair of tractive elements, shown as rear tractive elements 88, each coupled to one of the rear axles 86. As shown in FIG. 1, the rear axles 86 and the rear tractive elements 88 are configured as freely rotating casters. Accordingly, the rear tractive elements 88 permit the front tractive assembly 70 to steer and propel the vehicle 10, such that the vehicle 10 is a front-wheel drive vehicle. In other embodiments, the front tractive assembly 70 and/or the rear tractive assembly 80 are otherwise arranged. By way of example, the rear tractive elements 88 may be driven by a set of wheel motors. By way of another example, the front tractive assembly 70 and/or the rear tractive assembly 80 may be mechanically driven by the prime mover 52 (e.g., through one or more drive shafts). In some embodiments, the front tractive elements 78 and/or the rear tractive elements 88 are steerable. In some embodiments, the front tractive elements 78 and/or the rear tractive elements 88 are fixed and not steerable.

According to the exemplary embodiment shown in FIG. 1, the front tractive elements 78 and the rear tractive elements 88 are structured as wheels. In other embodiments, the front tractive elements 78 and the rear tractive elements 88 are otherwise structured (e.g., tracks, etc.).

According to an exemplary embodiment, the braking system 94 includes one or more brakes (e.g., disc brakes, drum brakes, in-board brakes, axle brakes, etc.) positioned to facilitate selectively braking (i) one or more components of the driveline 50 and/or (ii) one or more components of a trailed implement. In some embodiments, the one or more brakes include (i) one or more front brakes positioned to facilitate braking one or more components of the front tractive assembly 70 and (ii) one or more rear brakes positioned to facilitate braking one or more components of the rear tractive assembly 80. In some embodiments, the one or more brakes include only the one or more front brakes. In some embodiments, the one or more brakes include only the one or more rear brakes. In some embodiments, the one or more front brakes include two front brakes, one positioned to facilitate braking each of the front tractive elements 78. In some embodiments, the one or more front brakes include at least one front brake positioned to facilitate braking the front axle 76. In some embodiments, the one or more rear brakes include two rear brakes, one positioned to facilitate braking each of the rear tractive elements 88. In some embodiments, the one or more rear brakes include at least one rear brake positioned to facilitate braking the rear axle 86. Accordingly, the braking system 94 may include one or more brakes to facilitate braking the front axle 76, the front tractive elements 78, the rear axle 86, and/or the rear tractive elements 88. In some embodiments, the one or more brakes additionally include one or more trailer brakes of a trailed implement attached to the vehicle 10. The trailer brakes are positioned to facilitate selectively braking one or more axles and/or one more tractive elements (e.g., wheels, etc.) of the trailed implement.

### Header

According to the exemplary embodiment shown in FIGS. 1, 3, 4, and 5, the vehicle 10 includes a header or mower (e.g., a rotary disc header), shown as header 100. The header 100 is configured to facilitate harvesting of plant material growing within a field or other growing area by cutting through a stem of the plant. The cut plant material may be placed on the ground and allowed to dry for a period of time before being collected. The header 100 may include a conditioning system that crushes the plant material to facilitate drying. The header 100 may be used to harvest a variety of different plants or crops, such as grass, hay, grain, wheat, legumes, alfalfa, or other crops. In other embodiments, the vehicle 10 includes another implement (e.g., a tedder, a rake, a merger, etc.).

As shown in FIG. 1, the header 100 is coupled to the frame 12 and positioned at a front end of the vehicle 10. In other embodiments, the header 100 is positioned directly below the body 20 (e.g., between the front tractive assembly 70 and the rear tractive assembly 80). In yet other embodiments, the header 100 is a trailed implement that extends behind the body 20.

Referring to FIG. 3, the header 100 is powered by the vehicle 10. Specifically, as shown, the valves 60 are fluidly coupled to the header 100, such that the valves 60 supply pressurized fluid to drive the header 100. In other embodiments, the header 100 is mechanically coupled to the prime mover 52 (e.g., by a power take off shaft), such that the header 100 is at least partially powered by rotational mechanical energy received from the prime mover 52. In yet other embodiments, the header 100 is electrically powered, and the vehicle 10 supplies electrical energy to drive operation of the header 100.

The header 100 includes a header actuator (e.g., a linear actuator, a hydraulic cylinder, etc.), shown as header actuator 102, that is fluidly coupled to the valves 60. The header actuator 102 couples the header 100 to the frame 12 and is configured to selectively raise and lower the header 100 relative to the frame 12 (e.g., to control a cut height of the header 100, to raise the header 100 to facilitate travel on a road, etc.). The valves 60 may control operation of the header actuator 102 by either directing fluid to the header actuator 102 and/or by removing fluid from the header actuator 102. The header actuator 102 may be single acting (e.g., lowered by the force of gravity) or double acting (e.g., powered in the raise and lower directions).

The header 100 further includes one or more drivers, shown as header motors 110 (e.g., hydraulic motors, etc.). The header motors 110 are fluidly coupled to the valves 60, such that the valves control operation of the header motors 110. The valves 60 may control the speed of the header motors 110 by varying flow rate of fluid supplied to the header motors 110. The valves 60 may control the torque of the header motors 110 by varying the pressure of the fluid supplied to the header motors 110. In other embodiments, the header motors 110 are otherwise powered (e.g., as electric motors).

The header 100 includes a first subassembly or cutterbar, shown as cutter 120, a second subassembly or collector, shown as auger 130, and a third subassembly or conditioner, shown as conditioning system 140. The cutter 120, the auger 130, and the conditioning system 140 are all powered by the header motors 110. In some embodiments, the header motors 110 are coupled to a gearbox that distributes rotational mechanical energy from the header motors 110 to the cutter 120, the auger 130, and the conditioning system 140. Such a gearbox may control the relative rotational timings of the cutter 120, the auger 130, and/or the conditioning system 140. In other embodiments, one or more of the cutter 120, the auger 130, and the conditioning system 140 are independently driven by one or more header motors 110.

The cutter 120 is configured to cut through the stems of the plant material, separating the plant material from the roots. The auger 130 collects the separated plant material, moving it laterally inward toward a centerline of the header 100. The conditioning system 140 crushes, presses, squeezes, mashes, pulps, pulverizes, or otherwise conditions the plant material to facilitate drying. The crushed material is dispensed from the header 100 onto the ground, where it may be later collected by another vehicle (e.g., a baler, a harvest vehicle, etc.). **In** other embodiments, the auger 130 is omitted, and the plant material passes directly from the cutter 120 to the conditioning system 140.

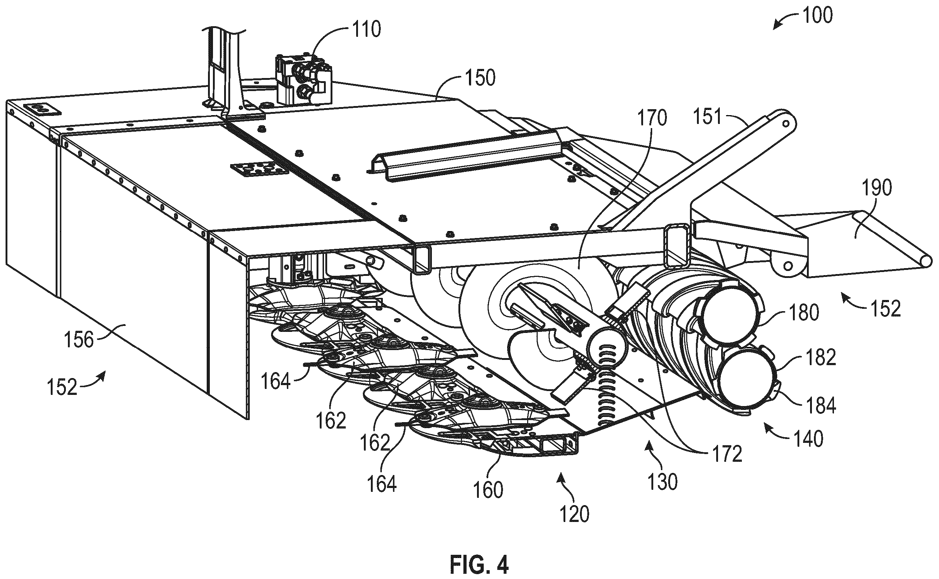

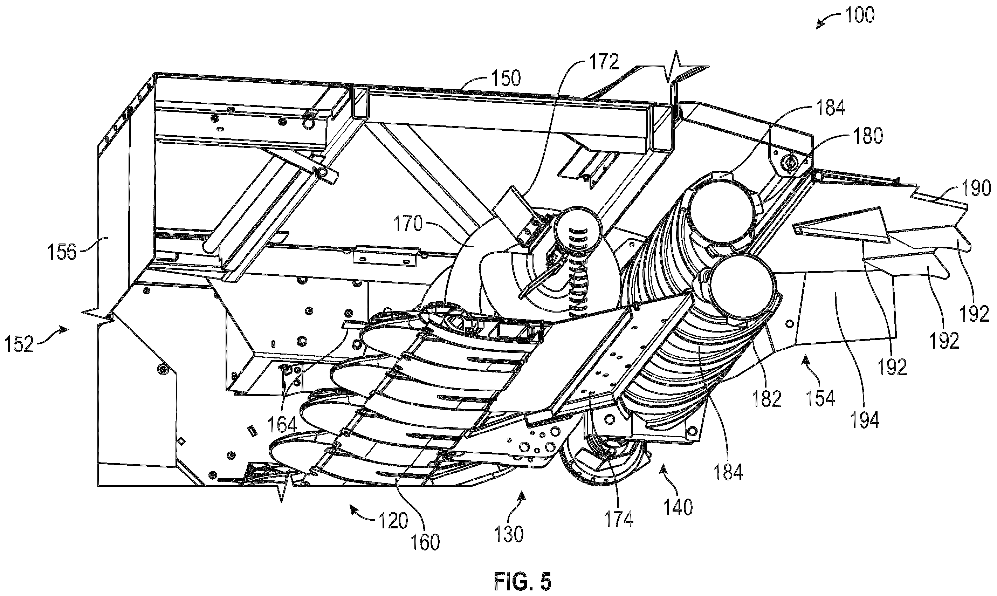

Referring to FIGS. 4 and 5, the header 100 is shown according to an exemplary embodiment. The header 100 includes a body, chassis, or frame, shown as housing 150, coupled to the frame 12 of the vehicle 10. The housing 150 may be selectively coupled to the frame 12 (e.g., to facilitate removal of the header 100 for maintenance or to interchange with another implement). The housing 150 includes a projection, shown as support arm 151, that is configured to be coupled to the header actuator 102. The housing 150 supports the other components of the header 100.

The housing 150 defines a flow path for plant material to pass through the header 100. The flow path passes from an inlet 152 positioned at the front of the header 100 to an outlet 154 positioned at a rear end of the header 100. The inlet 152 may be wider than the outlet 154, such that the header 100 collects the plant material into a narrow swath (e.g., a narrow windrow, etc.) to facilitate subsequent collection.

A flexible barrier, shown as curtain 156, is coupled a front end of the housing 150. The curtain 156 extends downward from the housing 150 and across the inlet 152. The flexible nature of the curtain 156 permits plant material to enter the inlet 152 but resists debris (e.g., rocks, sticks, etc.) and cut plant material from being ejected through the inlet 152.

As shown in FIGS. 4 and 5, the cutter 120 is configured as a rotary disc cutterbar. The cutter 120 includes a base, frame, or deflector, shown as rock guard 160, that is coupled to the housing 150. The rock guard 160 extends laterally across the header 100 immediately downstream of the inlet 152. The rock guard 160 protects the moving components of the cutter 120 (e.g., the cutting discs 162, the knives 164, etc.) from contact with debris (e.g., rocks, sticks, etc.) on the ground beneath the header 100. The rock guard 160 may also house a power transmission (e.g., a gear train) that distributes rotational mechanical energy throughout the cutter 120.

The cutter 120 further includes a series of cutting elements, shown as cutting discs 162, that are positioned at regular intervals along a length of the rock guard 160. Each cutting disc 162 is rotatably coupled to the rock guard 160 and configured to rotate about a substantially vertical axis. Each cutting disc 162 includes one or more cutting elements, shown as knives 164, positioned along a circumference of the cutting disc 162. The cutting discs 162 are all coupled to the header motors 110 (e.g., directly, by a power transmission, etc.) and are driven to rotate by the header motors 110. As the cutting discs 162 rotate, the knives 164 move horizontally, striking plant matter that enters the inlet 152 and shearing the stems of the plants. The sheared plant matter then falls over the cutter 120 and engages the auger 130.

The auger 130 is positioned downstream of the cutter 120. The auger 130 is rotatably coupled to the housing 150 and configured to rotate about a laterally extending, horizontal axis. The auger 130 is coupled to the header motors 110 (e.g., directly, by a power transmission, etc.) and driven to rotate by the header motors 110. The auger 130 includes a pair of helical elements 170 extending radially outward from a central shaft. The helical elements 170 are laterally offset from one another. A series of paddles 172 are positioned between the helical elements 170. The helical elements 170 have opposing helical pitches. Accordingly, as the auger 130 rotates, the helical elements 170 direct plant matter laterally inward, toward the center of the auger 130. Due to the opposing helical pitches of the helical elements 170, plant matter that contacts a first of the helical elements 170 is directed in a first direction, and plant matter that contacts a second of the helical elements 170 is directed in an opposing second direction. Once the plant matter is between the helical elements 170, the paddles 172 engage the plant matter and direct the plant matter rearward. A panel or shield, shown as floor panel 174, extends beneath the auger 130 and between the cutter 120 and the conditioning system 140. The plant material is contained between the housing 150 and the floor panel 174, preventing the plant material from spilling out of the header 100.

The conditioning system 140 is positioned downstream of the auger 130. As shown in FIGS. 4 and 5, the conditioning system 140 includes a pair of conditioning rollers, shown as top roller 180 and bottom roller 182, rotatably coupled to the housing 150. The top roller 180 and the bottom roller 182 each extend laterally across the housing 150, substantially parallel to one another. The top roller 180 and the bottom roller 182 are coupled to the header motors 110 (e.g., directly, by a power transmission, etc.) and are driven to rotate in opposing directions by the header motors 110. By way of example, the top roller 180 may rotate counter clockwise as shown in FIG. 5, and the bottom roller 182 may rotate clockwise. A gap is formed between the top roller 180 and the bottom roller 182, permitting plant matter to pass between the top roller 180 and the bottom roller 182. Due to the opposing rotational directions of the top roller 180 and the bottom roller 182, the top roller 180 and the bottom roller 182 draw the plant material through the gap, compressing the plant material between the top roller 180 and the bottom roller 182.

In some embodiments, the distance between the top roller 180 and the bottom roller 182 is variable. By way of example, the bottom roller 182 may have a fixed vertical position, and the top roller 180 may have an adjustable vertical position. The top roller 180 may be biased toward the bottom roller 182 (e.g., by a set of springs), such that the top roller 180 and the bottom roller 182 are held against one another by a biasing force. In other embodiments, the vertical positions of one or more of the top roller 180 and the bottom roller 182 are manually adjustable by an operator. By adjusting the size of the gap and/or the biasing force between the motors, the extent of the conditioning (e.g., how thoroughly the plant material is pulverized) can be adjusted.

The conditioning system 140 may be configured with a variety of different conditioning elements. In some such embodiments, one conditioning element or set of conditioning elements may be removed and replaced with another conditioning element or set of conditioning elements. In various embodiments, the top roller 180 and the bottom roller 182 may be made from a variety of different materials such as steel or rubber. As shown in FIG. 5, the top roller 180 and the bottom roller 182 each include a helical protrusion, shown as protrusion 184, that extends radially outward. The protrusions 184 intermesh, crimping the plant material between the protrusions 184 for additional conditioning. In other embodiments, the protrusions 184 are omitted, and the top roller 180 and the bottom roller 182 each have a smooth cylindrical outer surface.

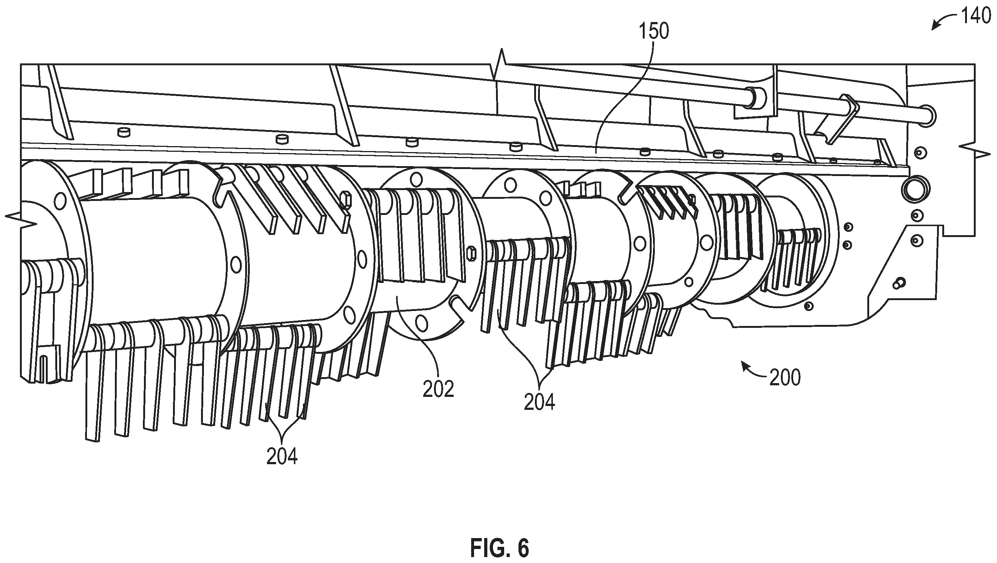

FIG. 6 illustrates another type of conditioning element usable with the conditioning system 140. In the embodiment of FIG. 6, the top roller 180 and the bottom roller 182 are omitted and replaced with a flail roller 200. The flail roller 200 includes a base roller 202 and a series of flail elements, shown as tines 204. The tines 204 are rotatably coupled to the base roller 202. Each tine 204 is rotatable about an axis that is offset from an axis of rotation of the base roller 202. In operation, the tines 204 are forced to extend outward by the rotation of the base roller 202. As the tines 204 come into contact with plant material, the tines momentum of the tines 204 causes the tines 204 to crush the plant material.

Referring again to FIGS. 4 and 5, the header 100 includes a rotatable panel, shown as swath baffle 190, that is positioned downstream of the outlet 154. The swath baffle 190 is positioned above the outlet 154 and directs plant material downward as the plant material leaves the header 100. The swath baffle 190 is coupled to the housing 150. In some such embodiments, the swath baffle 190 is rotatably coupled to the housing 150, such that the swath baffle 190 can rotate about a lateral axis. The position of the swath baffle 190 may be adjusted (e.g., manually, by an actuator, etc.) to control the downward trajectory of plant material from the header 100. A series of control elements, shown as fins 192, are positioned along an underside of the swath baffle 190. The fins 192 may be angled relative to the flow of plant material to adjust the trajectory of the plant material (e.g., to bring the plant material laterally toward the center of the header 100). A controllable element, shown as baffle wall 194, extends downward from the swath baffle 190. The position of the baffle wall 194 may be adjusted (e.g., manually, by an actuator, etc.) to control a width of a swath (e.g., a windrow, etc.) of the plant material formed by the header 100 of the vehicle 10 as the vehicle 10 travels through a field (e.g., outputted by the header 100 of the vehicle 10 as the vehicle 10 travels through the field, etc.). By way of example, when the baffle wall 194 is positioned in a first position relative to the swath baffle 190, the swath of the plant material formed by the header 100 may have a first width. When the baffle wall 194 is positioned in a second position relative to the swath baffle 190 that is further from the fins 192 than the first position, the swath of the plant material formed by the header 100 may have a second width that is greater than the first width.

### Control System

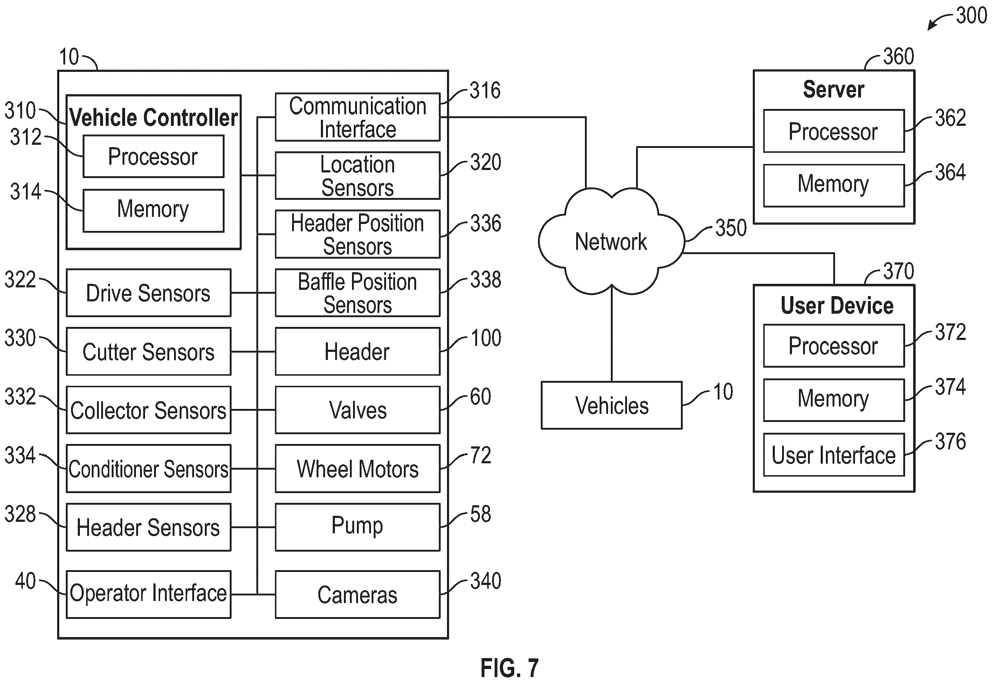

Referring to FIG. 7, the control system 300 of the vehicle 10 is shown according to an exemplary embodiment. The control system 300 includes a first processing circuit, shown as vehicle controller 310. The vehicle controller 310 is configured to at least partially control operation of the vehicle 10. The vehicle controller 310 includes a processor 312 and a memory device, shown as memory 314. The memory 314 may include a non-transitory computer-readable medium that store instructions that, when executed by the processor 312, cause the vehicle controller 310 to perform the various processes described herein. The control system 300 further includes a network interface, shown as communication interface 316, that facilitates communication between the vehicle controller 310 and various external elements.

The vehicle controller 310 is operatively coupled to the operator interface 40, the pump 58, the valves 60, the wheel motors 72, and the header 100 (e.g., the header motors 110). The vehicle controller 310 may provide control signals to control operation of the operator interface 40, the pump 58, the valves 60, the wheel motors 72, and/or the header 100. By way of example, the vehicle controller 310 may provide electrical signals, control the valves 60 to adjust flows of hydraulic fluid, vary a displacement of the pump 58, and/or otherwise control components of the vehicle 10.

The vehicle 10 includes one or more sensors, shown as location sensors 320, that indicate a location of the vehicle 10. The location sensors 320 may indicate an absolute location of the vehicle 10 (e.g., a location of the vehicle 10 relative to the Earth). By way of example, the location sensors 320 may include a global positioning system (GPS) that indicates a global position of the vehicle 10. Additionally or alternatively, the location sensors 320 may indicate a relative position of the vehicle 10 (e.g., a position of the vehicle 10 relative to a landmark, relative to another vehicle 10, a position of the vehicle 10 relative to a reference point, etc.). By way of example, the location sensors 320 may include gyroscopic sensor, accelerometers, ultrasonic distance sensors, cameras that identify positions of visual identifiers, rotation sensors that measure the distance travelled by one or more of the front tractive elements 78, or other types of sensors. The location sensors 320 may indicate a ground speed of vehicle 10 (e.g., based on a change in measured location over time, based on a rotational speed of a tractive element, etc.).

The vehicle 10 includes a variety of sensors measure conditions related to various systems of the vehicle 10. In some embodiments, the variety of sensors measure conditions associated with the plant material passing through the header 100. The vehicle controller 310 may utilize the measured data to determine attributes associated with the plant material passing through the header 100. In some embodiments, the variety of sensors measure loads related to the various systems of the vehicle 10. The vehicle controller 310 may utilize the measured data to determine the load on each component. By way of example, the vehicle controller 310 may utilize the measurements provided by each sensor to determine the load on the wheel motors 72 and/or the header 100.

The vehicle 10 includes one or more propulsion sensors or wheel sensors, shown as drive sensors 322. The drive sensors 322 provide measurement data related to the front tractive elements 78 and/or the rear tractive elements 88. In some embodiments, the drive sensors 322 provide measurement data related to or indicative of the field that the vehicle 10 travels through. By way of example, the drive sensors 322 may measure an orientation of the front tractive elements 78. This may be measured directly (e.g., using an accelerometer, etc.) or indirectly (e.g., by measuring a torque required to drive the front tractive elements 78, etc.)

In some embodiments, the drive sensors 322 provide measurement data related to or indicative of a power required to propel the vehicle 10. By way of example, the drive sensors 322 may measure rotational speeds of the front tractive elements 78. This may be measured directly (e.g., using an encoder or other rotation sensor) or indirectly (e.g., by measuring a flow rate of fluid delivered to one of the wheel motors 72). By way of another example, the drive sensors 322 may measure a force or torque required to drive the front tractive elements 78. This may be measured directly (e.g., by placing a strain gauge or torque transducer on one of the front axles 76, etc.) or indirectly (e.g., by measuring a pressure of the fluid being supplied to the wheel motors 72, etc.). Based on the speed of the front tractive elements 78 and/or the torque required to drive the front tractive elements 78, the power being delivered to the front tractive elements 78 by the wheel motors 72 may be calculated. Correlations between the conditions measured by the drive sensors 322 and the power supplied by the wheel motors 72 to propel the vehicle 10 may be predetermined and stored in the memory 314.

In some embodiments, the vehicle 10 includes one or more sensors that provide data related to the header 100. In some embodiments, the sensors provide measurement data indicative of conditions associated with the plant material passing through the header 100. By way of example, the sensors may measure a moisture level of the plant material passing through the header 100. In some embodiments, the sensors provide measurement data indicative of a load on the header 100. The sensors may measure the overall load on the header 100 (e.g., by measuring the fluid power supplied to the header 100) or may measure the load on individual components of the header 100 (e.g., the cutter 120, the auger 130, the conditioning system 140, etc.). Generally, the sensors may measure a speed at which the header 100 operates (e.g., the speed of a component, the flow rate of fluid to the header 100, etc.) and/or a force or torque required to drive the header 100 (e.g., the torque on a roller, the pressure of the fluid supplied to the header 100, etc.). In other embodiments, the vehicle 10 includes one or more sensors that provide data related to the other attachments of the vehicle 10. For example, when the vehicle 10 is configured as a tractor including and/or towing a rake, the vehicle 10 may include one or more sensors that provide data related to the rake. As another example, when the vehicle 10 is configured as a tractor including and/or towing a tedder, the vehicle 10 may include one or more sensors that provide data related to the tedder.

In some embodiments, the vehicle 10 includes one or more header sensors, shown as header sensors 328. The header sensors 328 provide measurement data related to or indicative of the operation of the header 100. In some embodiments, the header sensors 328 provide measurement data related to or indicative of the conditions of the plant material passing through the header 100. In some embodiments, the header sensors 328 provide measurement data related to or indicative of a power required to drive the header 100. The header sensors 328 may indicate the overall load on the header 100 (e.g., the overall power required to drive the header 100). By way of example, the header sensors 328 may measure an operating speed of the header 100 (e.g., by measuring a flow rate of fluid delivered to the header motors 110). By way of another example, the header sensors 328 may measure a force required to drive the header 100 (e.g., by measuring the pressure of the fluid delivered to the header motors 110, etc.). Based on the speed of the speed of the header 100 and/or the force required to drive the header 100, the power being delivered to the header 100 by the vehicle 10 may be calculated. By way of example, the flow rate and pressure of the fluid supplied to the header motors 110 may be multiplied to calculate the power supplied to the header 100. Correlations between the conditions measured by the header sensors 328 and the power supplied to the header 100 may be predetermined and stored in the memory 314.

The vehicle 10 may include one or more cutter sensors, shown as cutter sensors 330. The cutter sensors 330 provide measurement data related to or indicative of the operation of the cutter 120. In some embodiments, the cutter sensors 330 provide measurement data related to or indicative of the conditions of the plant material cut by the cutter sensors 330. By way of example, the cutter sensors 330 may measure a moisture content of the plant material when the cutter 120 cuts through the plant material. In some embodiments, the cutter sensors 330 provide measurement data related to or indicative of a power required to drive the cutter 120. By way of example, the cutter sensors 330 may measure rotational speeds of the cutting discs 162. This may be measured directly (e.g., using an encoder or other rotation sensor) or indirectly (e.g., by measuring a flow rate of fluid delivered to one or more of the header motors 110). By way of another example, the cutter sensors 330 may measure a force or torque required to drive the cutter 120. This may be measured directly (e.g., by placing a torque transducer on an input shaft of one or more of the cutting discs 162, etc.) or indirectly (e.g., by measuring a pressure of the fluid being supplied to the header motors 110, etc.). Based on the speed of the cutter 120 and/or the torque required to drive the cutter 120, the power being delivered to the cutter 120 by the header motors 110 may be calculated. Correlations between the conditions measured by the cutter sensors 330 and the power supplied to the cutter 120 may be predetermined and stored in the memory 314.

The vehicle 10 may include one or more collector sensors, shown as collector sensors 332. The collector sensors 332 provide measurement data related to or indicative of the operation of the auger 130. In some embodiments, the collector sensors 332 provide measurement data related to or indicative of the conditions of the plant material handled by the auger 130. In some embodiments, the collector sensors 332 provide measurement data related to or indicative of a power required to drive the auger 130. By way of example, the collector sensors 332 may measure the rotational speed of the auger 130. This may be measured directly (e.g., using an encoder or other rotation sensor) or indirectly (e.g., by measuring a flow rate of fluid delivered to one or more of the header motors 110). By way of another example, the collector sensors 332 may measure a force or torque required to drive the auger 130. This may be measured directly (e.g., by placing a torque transducer on the auger 130, etc.) or indirectly (e.g., by measuring a pressure of the fluid being supplied to the header motors 110, etc.). Based on the speed of the auger 130 and/or the torque required to drive the auger 130, the power being delivered to the auger 130 by the header motors 110 may be calculated. Correlations between the conditions measured by the collector sensors 332 and the power supplied to the auger 130 may be predetermined and stored in the memory 314.

The vehicle 10 may include one or more conditioning system sensors, shown as conditioner sensors 334. The conditioner sensors 334 provide measurement data related to or indicative of the operation of the conditioning system 140 (e.g., the top roller 180, the bottom roller 182, the flail roller 200, etc.). In some embodiments, the conditioner sensors 334 provide measurement data related to or indicative of the of the condition of the plant material conditioned by the conditioning system 140. By way of example, the conditioner sensors 334 may measure a crush parameter associated with the conditioning of the plant material conditioned by the conditioning system 140. In some embodiments, the conditioner sensors 334 provide measurement data related to or indicative of a power required to drive the conditioning system 140 (e.g., the top roller 180, the bottom roller 182, the flail roller 200, etc.). By way of example, the conditioner sensors 334 may measure rotational speeds of one or more rollers. This may be measured directly (e.g., using an encoder or other rotation sensor) or indirectly (e.g., by measuring a flow rate of fluid delivered to one or more of the header motors 110). In some embodiments, a rotational speed of only one of the top roller 180 and the bottom roller 182 is measured. By way of example, the top roller 180 may be floating (e.g., free to move vertically) and biased toward the bottom roller 182 (e.g., by gravity and/or springs). In this case, the top roller 180 may be constantly in engagement with plant material when the plant material passes through the conditioning system 140, such that the top roller 180 provides an accurate measurement of the speed at which plant material moves through the conditioning system 140. By way of another example, the top roller 180 may be free spinning, and the bottom roller 182 may be driven by the header motors 110. In such an embodiment, the rotational speed of the top roller 180 may provide a direct indication of the speed at which plant material is flowing through the header 100. By way of another example, the conditioner sensors 334 may measure a force or torque required to drive the conditioning system 140. This may be measured directly (e.g., by placing a torque transducer on the top roller 180, the bottom roller 182, and/or the flail roller 200, etc.) or indirectly (e.g., by measuring a pressure of the fluid being supplied to the header motors 110, etc.). Based on the speed of the conditioning system 140 and/or the torque required to drive the conditioning system 140, the power being delivered to the conditioning system 140 by the header motors 110 may be calculated. Correlations between the conditions measured by the conditioner sensors 334 and the power supplied to the conditioning system 140 may be predetermined and stored in the memory 314.

The vehicle 10 further includes one or more sensors, shown as header position sensors 336, that indicate a position of the header 100 relative to the frame 12. By way of example, the header position sensors 336 may indicate a vertical position of the header 100 (e.g., relative to the ground). By way of another example, the header 100 may be pivotally coupled to the frame 12, and the header position sensors 336 may indicate an angular position of the header 100 (e.g., relative to the frame 12, relative to the direction of gravity, etc.). In one such example, the header 100 pivots about a horizontal axis, such that rotation of the header 100 adjusts a cutting height of the header 100. In some embodiments, the header position sensors 336 indicate a current length of the header actuator 102 (e.g., using a linear potentiometer or encoder).

The vehicle 10 further includes one or more sensors, shown as baffle position sensors 338, that indicate a position of the swath baffle 190. By way of example, the baffle position sensors 338 may indicate an angular orientation of the swath baffle 190 relative to the housing 150. In some embodiments, the baffle position sensors 338 include encoders or potentiometers that directly measure the angular position of the swath baffle 190. In some embodiments, the baffle position sensors 338 are configured to indicate a position of the baffle wall 194. By way of example, the baffle position sensors 338 may indicate a position of the baffle wall 194 relative to the swath baffle 190. The vehicle controller 310 may determine a parameter (e.g., a condition, an attribute, a swath parameter, a variable, etc.) associated with the swath of the plant material formed by the header 100 based at least partially on data received from the baffle position sensors 338. By way of example, the vehicle controller 310 may determine a width of the swath of the plant material formed by the header 100 based on the angular orientation of the swath baffle 190 relative to the housing 150 and/or the position of the baffle wall 194 relative to the swath baffle 190. In other embodiments, the vehicle controller 310 may determine parameters associated with swaths of plant materials formed by other vehicles (e.g., rakers, harvesters, etc.).

The vehicle 10 further includes one or more image sensors or environment sensors, shown as cameras 340, operatively coupled to the vehicle controller 310. The cameras 340 may be configured to provide image data. In other embodiments, the vehicle 10 additionally or alternatively includes a different type of environment sensor, such as an ultrasonic distance sensor or an infrared time of flight sensor, which indicates a distance between the vehicle 10 and an object in the surrounding environment. In some embodiments, the cameras 340 provide image data indicative of an environment surrounding the vehicle 10. In some embodiments, the cameras 340 provide image data relating to a swath of the plant material that will be formed by the vehicle 10. By way of example, the cameras 340 may capture image data of an area forward of the vehicle 10. The area may include a swath of the plant material that is about to be formed by the vehicle 10 (e.g., raked by a rake of the vehicle 10, merged by a merger of the vehicle 10, turned by a tedder of the vehicle 10, etc.). The vehicle controller 310 may perform image recognition on the image data to determine a width of the swath of the plant material about to be formed by the vehicle 10. In some embodiments, the cameras 340 provide image data relating to the amount of plant material entering or exiting the header 100. By way of example, the cameras 340 may capture image data of an area forward of the header 100. The area may include a section of plant material that is about to enter the header 100. The vehicle controller 310 may perform image recognition on the image data (e.g., based on a predetermined relationship between an amount of pixels and a real-world distance) to determine a width of the section of plant material about to enter the header 100. In some embodiments, the vehicle controller 310 may determine a yield of the swath of the plant material processed by the header 100 based on the image data of the plant material that is about to enter the header 100. By way of example, the vehicle controller 310 may perform image recognition on the image data relating to the plant material that is about to enter the header 100 to determine the yield of the swath that will be formed by the plant material that is about to enter the header 100.

By way of another example, the cameras 340 may provide image data capturing an area behind the header 100. This area may include the swaths of the plant material formed by the vehicle 10. **In** some embodiments, this area may include the swaths of harvested plant material formed by the header 100 of the vehicle 10 as the vehicle 10 travels through a field. The vehicle controller 310 may perform image recognition to determine a parameter (e.g., a width and height of the swath, a density of the swath, etc.) associated with the swath of plant material formed by the header 100. By way of example, the vehicle controller 310 may have a predetermined calibration that correlates a number of pixels captured by a camera with a real-world distance. Accordingly, based on the image data, the vehicle controller 310 may determine parameters associated with the swath of plant material formed by the header 100 in real time.

The communication interface 316 may facilitate communication between the vehicle 10 and other devices of the control system 300. By way of example, the communication interface 316 may communicate over a network 350. The network 350 may facilitate communication (e.g., transfer of data) between one or more vehicles 10, servers 360, and/or user devices 370. The devices of the control system 300 may communicate directly with one another, over the network 350, or indirectly through one another (e.g., forming a mesh network). By way of example, the vehicle 10 configured as the windrower may communicate the parameters associated with the swath of plant material formed by the header 100 with another one of the vehicles 10 configured as a bailer to facilitate the baler bailing the swath of plant material formed by the header 100. As another example, the vehicle 10 including a tedder may communicate the parameters of the swath of the plant material formed by the tedder with another one of the vehicles 10 including a merger to facilitate the merger merging the swath of the plant material formed by the tedder into a merged swath of the plant material.

In some embodiments, the devices of the control system 300 utilize wireless communication. By way of example, the devices may utilize a cellular network, Bluetooth, near field communication (NFC), infrared communication, radio, or other types of wireless communication. In other embodiments, the communication interface 316 utilizes wired communication (e.g., a controller area network (CAN), etc.). **In** some embodiments, the network 350 includes a cellular network, a local area network, a wide area network, the Internet, and/or other networks.

The server 360 may be positioned remote from the vehicles 10 and positioned to host one or more centralized functions (e.g., for a fleet of the vehicles 10, for a manufacturer of the vehicles 10, etc.). The memory 364 may act as a centralized device for storing and/or processing the data generated by the control system 300. The server 360 includes a processing circuit including a processor 362 and a memory device, shown as memory 364. The memory 364 may store instructions that, when executed by the processor 362, cause the server 360 to perform the various processes described herein. The memory 364 may additionally store data generated by the control system 300.

The user devices 370 facilitate users (e.g., vehicle operators, system managers, customers, etc.) interfacing with the vehicles system. The user devices 370 may include smartphones, tablets, laptops or desktop computers, and/or other devices. The user devices 370 each include a processing circuit including a processor 372 and a memory device, shown as memory 374. The memory 374 may store instructions that, when executed by the processor 372, cause the user device 370 to perform the various processes described herein.

Each user device 370 further includes an input/output device, shown as user interface 376, that facilitates communicating information between the user device 370 and a user. The user interface 376 may include output devices (e.g., displays, lights, speakers, haptic feedback devices, etc.) that facilitate communicating information to a user. The user interface 376 may include input devices (e.g., touchscreens, buttons, switches, microphones, etc.) that facilitate the user communicating information (e.g., commands) to the user device 370.

Any processing described herein may be performed by any of the devices of the control system 300. By way of example, processing described herein as being performed by the vehicle controller 310 of a vehicle 10 may additionally or alternatively be performed by the vehicle controller 310 of another vehicle 10, a server 360, and/or a user device 370. In some embodiments, the processing is distributed across multiple devices, such that one or more vehicle controllers 310, servers 360, and/or user devices 370 cooperate to perform the processing.

### Swath Parameter Determination

The control system 300 may be configured to utilize various data generated by the control system 300 to determine parameters associated with swaths of the plant material formed (e.g., harvested, raked, turned over, merged, manipulated, etc.) by the vehicle 10 as the vehicle 10 travels through the field. In some embodiments, the control system 300 may be configured to utilize various data generated by the control system 300 to determine the parameters associated with the swaths of the plant material formed by the header 100 of the vehicle 10 as the vehicle 10 travels through the field. The vehicle controller 310 may report the parameters associated with the swaths of the plant material to a user (e.g., through a graphical user interface, etc.). The swaths of the plant material may be constant across the field, or the swaths may each represent a portion of the plant material that is produced and harvested in a given area of a field. By way of example, a first swath of the plant material may represent a first portion of the plant material formed by the vehicle 10 as the vehicle 10 travels through a first portion of the field, a second swath of the plant material may represent a second portion of the plant material formed by the vehicle 10 as the vehicle 10 travels through a second portion of the field, etc. The parameters associated with the swaths of plant material may include locations of the swaths of the plant material, sizes of the swaths of the plant material (e.g., widths of the swaths, heights of the swaths, etc.), shapes of the swaths of the plant material, moisture contents of the swaths of the plant material, yields of the swaths of the plant material (e.g., amounts of the plant material, etc.), conditionings of the swaths of the plant material, or other conditions associated with the swaths of the plant material.

The parameters associated with the swaths of the plant material may be represented as absolute amounts (e.g., widths of the swaths of plant material, mass of plant material harvested per swath length, moisture percentage of the swaths of the plant material, crush forces applied to the swaths of the plant material, etc.) or a relative amount (e.g., based on a scale from 0% to 100%, by defining a high moisture swath and a low moisture swath, etc.). It may be desirable to determine the parameters associated with the swaths of the plant material in a field in order to perform additional operations on the swaths of the plant material in the field. For example, it may be desirable to determine the parameters associated with the swaths of the plant material in a field in order to gather the swaths of the plant material from the field, facilitating efficiently gathering methods. Gathering methods may vary based on the parameters associated with the swaths of the plant material, such as using a certain baler when a width of the swaths is above a threshold or determining a number of vehicles required to transport the plant material. Accordingly, by reporting the parameters of the swaths of the plant material to a user, the vehicle 10 facilitates the user identifying efficient gathering methods for gathering the swaths of the plant material from the field to increase gathering efficiency. By way of example, the control system 300 may recommend that a user perform three passes with a baler in order to gather the swaths of the plant material in a field. Accordingly, the control system 300 beneficially facilitates maximizing a gathering efficiency for swaths of plant material in a field formed by the vehicle 10. Based on the parameters associated with the swaths of the plant material, the control system 300 may also predict an about of revenue that will result from a harvest of the swaths of the plant material in a field, and therefore the profitability of the harvest.

Generally, as the vehicle 10 forms the swaths of the plant material in an area of a field, the control system 300 receives measurement data from the sensors of the vehicle 10 related to or indicative of the operation of the vehicle 10 (e.g., from the drive sensors 322, the cutter sensors 330, the collector sensors 332, the conditioner sensors 334, etc.). Based on the measurement data, the control system 300 (e.g., one or more of the vehicle controllers 310, the servers 360, or the user devices 370) may determine initial conditions associated with swaths of the plant material outputted by the vehicle 10 in the area of the field. In order to improve the accuracy of the initial conditions associated with the swaths of the plant material, the control system 300 may apply one or more correction factors (e.g., based on user inputs or other measured data, etc.) to further refine the initial conditions associated with the swaths of the plant material into corrected conditions associated with the swaths of the plant material. The corrected conditions associated with the swaths of the plant material may be associated with a location where the formation of the swaths of the plant material took place (e.g., as determined by the location sensors 320, etc.). This process may be repeated as the vehicle 10 travels throughout a field, and the control system 300 may compile the determined conditions associated with the swaths of the plant material and associated locations into a condition map characterizing the swaths of the plant material in the field.

### A. Measurement Data

The control system 300 may receive power measurement data or load measurement data including at least one parameter indicative of a load on the vehicle 10. The load measurement data may directly indicate an amount of power consumed to drive a portion of the vehicle 10, a parameter that may be used to calculate the amount of power consumed to drive a portion of the vehicle, or a parameter that is related to (e.g., is proportionate to, scales with, etc.) the amount of power consumed to drive a portion of the vehicle. By way of example, the load measurement data may include the power required to drive a component, a torque on the component, a force on the component, a stress or strain experienced by the component, a pressure of a fluid used to drive the component (e.g., through a hydraulic motor), or another parameter indicative of the load.

The load measurement data (e.g., drive data) may indicate a load on the wheel motors 72 (e.g., the power required to propel the vehicle 10 or a related parameter). By way of example, the load measurement data may be provided by the drive sensors 322. As the vehicle 10 drives forward, plant material contacts the curtain 156 and passes into the header 100 where the plant material is presented for cutting by the cutter 120. The wheel motors 72 supply the force to move the plant material past the curtain 156. As the amount of plant material in a given area increases, the force required to bring the plant material into the header 100 increases. Accordingly, an increase in the torque on the wheel motors 72, the pressure of the fluid supplied to the wheel motors 72, and/or the power consumed to propel the vehicle 10 may indicate a corresponding increase in yields of the swaths of the plant material. Such a parameter may be measured by the drive sensors 322. A relationship between the data from the drive sensors 322 and the yields of the swaths of the plant material may be predetermined (e.g., experimentally) and stored by the control system 300 (e.g., in the memory 364, in the memory 314, etc.).

The control system 300 may receive load measurement data (e.g., header data) indicating a load on the header 100 (e.g., an amount of power consumed to drive the header 100 or a related parameter). The load measurement data may be provided by one or more of the header sensors 328, the cutter sensors 330, the collector sensors 332, or the conditioner sensors 334. By way of example, the header sensors 328 may indicate the total amount of power required to drive the header 100, an amount of torque on a component of the header 100 (e.g., the header motors 110), a pressure of a fluid supplied to the header motors 110, or another related parameter. By way of another example, the cutter sensors 330 may indicate the amount of power required to drive the cutter 120 or a related parameter (e.g., a torque driving one of the cutting discs 162), the collector sensors 332 may indicate the amount of power required to drive the augers 130 or a related parameter (e.g., a torque driving the augers 130), and the conditioner sensors 334 may indicate the amount of power required to drive the conditioning system 140 or a related parameter (e.g., a torque driving the bottom roller 182). In such an example, the total load on the header 100 (e.g., the total power required to drive the header 100) may be a function of (e.g., the sum of) the load on the cutter 120 (e.g., the amount of power required to drive the cutter 120 or a related parameter), the load on the augers 130 (e.g., the amount of power required to drive the augers 130 or a related parameter), and the load on the conditioning system (e.g., the amount of power required to drive the conditioning system 140 or a related parameter).

As the amount of plant material in a given area increases, the load on the header 100 increases. By way of example, the energy and torque required to drive the cutting discs 162 through the plant material, drive the auger 130 to move the plant material toward the center of the header 100, and drive the conditioning system 140 to condition the plant material all increase as the rate at which plant material enters the header 100 increases. Accordingly, an increase in the power consumed to drive the header 100, the torque on the header motors 110, and/or the pressure supplied to the header motors 110 may indicate a corresponding increase in yields of the swaths of the plant material. A relationship between (a) the data from the header sensors 328, the cutter sensors 330, the collector sensors 332, and/or the conditioner sensors 334 and (b) the yields of the swaths of the plant material may be predetermined (e.g., experimentally) and stored by the control system 300 (e.g., in the memory 364, in the memory 314, etc.).

In some embodiments, the control system 300 may determine other conditions of the swaths of the plant material based on the calculated yield of the swath of the plant material. As the yield of the swaths of the plant material increases, a width, a height, and/or a density of the swaths of the plant materials may increase. A relationship between (i) the swaths of the plant material and (ii) the width, the height, and/or the density of the swaths of the plant materials may be predetermined (e.g., experimentally, etc.) and stored by the control system 300. The control system 300 may additionally or alternatively determine the width, the height, and/or the density of the swaths of the plant materials based on a position of the swath baffle 190 (e.g., relative to the housing 150, etc.). By way of example, as the swath baffle 190 is lowered, the swath baffle 190 enters the path of the plant material and more severely deflects the plant material toward the ground. Accordingly, lowering the swath baffle 190 may decrease the width of the swaths of the plant material and increase the height of the swaths of the plant material as the plant material is less dispersed.

The control system 300 may receive condition measurement data related to or indicative of conditions associated with the plant material passing through the header 100. The conditional measurement data may directly indicate at least one of the conditions associated with the plant material passing through the header 100. By way of example, the control system 300 may receive condition measurement data from the conditioner sensors 334 associated with a pressure applied by the conditioning system 140 on the plant material passing through the header 100. The control system 300 may determine a parameter of a swath of the plant material formed by the header 100 such as a conditioning of the swath of the plant material based on the pressure applied by the conditioning system 140 on the plant material. By way of another example, the control system 300 may receive condition measurement data from the header sensors 328 associated with a moisture content of the plant material passing through the header 100. The control system 300 may determine a parameter of a swath of the plant material formed by the header 100 such as a moisture content of the swath of the plant material based on the moisture content of the plant material when the plant material passed through the header 100.

### B. Correction Factors

While the measurement data provides an indication of conditions associated with a swath of plant material formed by the vehicle 10, the control system 300 may additionally utilize one or more correction factors to further improve the accuracy of the parameters associated with the swaths of the plant material. The correction factors may account for various conditions that may not be directly identified by the drive sensors 322, the header sensors 328, the cutter sensors 330, the collector sensors 332, and the conditioner sensors 334, but may still affect the parameters of the swaths of the plant material. By way of example, the correction factors may be predetermined, based on user inputs (e.g., through the operator interface 40), and/or based on sensor data. The relationship between each correction factor and the parameters of the swaths of the plant material may be predetermined (e.g., experimentally) and stored by the control system 300 (e.g., in the memory 364, in the memory 314, etc.).

In some embodiments, the correction factors may account for a time since the plant material was formed by the vehicle 10. In some embodiments, the correction factors may account for the time since the plant material was processed by the header 100 into the swath of the plant material. The correction factors account for a change in the moisture content of the swath of the plant material over the time, a change in the conditioning of the swath of the plant material over the time, etc. By way of example, if the moisture content of the plant material when the plant material was processed by the header 100 was 24% and the plant material was processed six hours ago, the moisture content of a swath of the plant material may have changed during the six hours that have passed since the plant material was processed by the header 100 due to evaporation of moisture from the swath of the plant material. Accordingly, a correction factor based on a time that has passed since the plant material was processed by the header 100 may decrease the moisture content of the swath of the plant material to account for changes to the moisture content of the swath of the plant material over the time. By way of another example, if the conditioning of the plant material when the plant material was processed by the header 100 is that the plant material was compressed to a compression ratio of 50% by the conditioning system 140 and the plant material was processed three hours ago, the compression ratio of a swath of the plant material may have changed during the three hours that have passed since the plant material was processed by the header 100 due to the plant material re-expanding after being compressed by the conditioning system 140. Accordingly, a correction factor based on a time that has passed since the plant material was processed by the header 100 may decrease a compression ratio of the swath of the plant material to account for changes to the compression ratio of the swath of the plant material over the time.

In some embodiments, the moisture content of swaths of plant material in a field is calculated based on information from the sensors of the vehicle, a time since the swaths of the plant material were formed by the vehicle, and environmental conditions. In some embodiments, the moisture content of the swaths of the plant material in the field is calculated based on information from the header sensors 328, a time since the plant material was processed by the header 100, and environmental conditions. By way of example, if the moisture content of the plant material when the plant material passed through the header 100 was 16%, the plant material was processed by the header 100 four hours ago, and an ambient humidity of an environment around the field is 10%, the control system 300 may calculate that the moisture content of a swath of the plant material is 12%. However, if the swath of the plant material is positioned in the shade (e.g., from a tree next to the field, from clouds, etc.), the evaporation of moisture from the plant material may be slowed and an actual moisture content of the swath of the plant material may be 14%. Accordingly, a correction factor based on shading conditions of the field may increase the calculated moisture content of the swath of the plant material to account for the swath of the plant material being positioned in the shade.

In some such embodiments, the yields of the swaths of the plant material is calculated based on the ground speed of the vehicle 10 (i.e., the speed at which the vehicle 10 moves relative to the ground). By way of example, as the ground speed of the vehicle 10 increases, the rate at which plant material enters the header 100 may increase. Accordingly, the amount of power required to propel the vehicle 10 may increase (e.g., due to the increased resistance from additional plant material), and the amount of power required to drive the header 100 may increase (e.g., due to the header 100 processing a greater amount of plant material in a given amount of time). Accordingly, a correction factor based on ground speed may reduce the calculated yields of the swaths of the plant material as the ground speed increases to account for increased loading of the header motors 110 and the wheel motors 72.

Additionally or alternatively, the yields of the swaths of the plant material may be calculated based on the location of the vehicle 10 (e.g., as provided by the location sensors 320). By way of example, the topography of the field may include changes in elevation. When ascending, the power and force required to propel the vehicle 10 may increase. Similarly, when descending, the power and force required to propel the vehicle 10 may decrease. The location sensors 320 may provide an indication of whether the vehicle 10 is ascending or descending, and the severity of the change in elevation. By way of example, the location sensor 320 may measure the elevation of the vehicle 10 directly. By way of another example, the topography of a field may be predetermined, and the control system 300 may compare data from the location sensor 320 with the predetermined topographical map of the field to determine the current change in elevation. The correction factor based on the location of the vehicle may reduce the calculated yields of the swaths of the plant material as the vehicle 10 is ascending to account for the increased loading of the wheel motors 72 due to the ascent.

In some embodiments, the yields of the swaths of the plant material is calculated based on an operating speed of an attachment of the vehicle 10. In some embodiments, the yields of the swaths of the plant material is calculated based on the operating speed of the header 100. The operating speed of the header 100 indicates how quickly the cutting discs 162, the auger 130, and the top roller 180 and the bottom roller 182 rotate. The operating speed of the header 100 may vary based on, for example, the flow rate of fluid supplied to the header motors 110. The operating speed of the header 100 may be sensed (e.g., by measuring the flow rate of the fluid supplied to the header motors 110). The operating speed of the header 100 may be determined based on a current setting of the vehicle 10 (e.g., a header speed setting provided as an input by the operator to the operator interface 40). The correction factor based on the operating speed of the header 100 may reduce or increase the calculated yields of the swaths of the plant material based on the determined operating speed of the header 100.

In some embodiments, the yields of the swaths of the plant material is calculated based on a sensed speed of one of the top roller 180 and the bottom roller 182. By way of example, the bottom roller 182 may be driven by the header motors 110, and the top roller 180 may be free spinning. In such an embodiments, the speed of the top roller 180 may indicate a speed at which plant material passes through the conditioning system 140. A rotational speed of this top roller 180 may be sensed by one of the conditioner sensors 334. The correction factor based on the rotational speed of the top roller 180 and/or the bottom roller 182 may reduce or increase the calculated yields of the swaths of the plant material based on the determined rotational speed.

In some embodiments, the yields of the swaths of the plant material is calculated based on a specification of the vehicle 10. In some embodiments, the yields of the swaths of the plant material is calculated based on a specification of the header 100, such as a width of the header 100. The vehicle 10 may be compatible with multiple different sizes of header 100. As the width of the header 100 increases, a wider row of plant material is permitted to enter the header 100, and amount of plant material that enters the header 100 increases. This increases the power required to propel the vehicle 10 and to drive the header 100, but also increases the amount of plant material that is harvested in a given pass. The width of the header 100 may be selected by a user (e.g., through the operator interface 40). The correction factor based on the width of the header 100 may reduce or increase the calculated yields of the swaths of the plant material based on the selected width of the header 100.

In some embodiments, the yields of the swaths of the plant material is calculated based on a current setting of the vehicle 10. In some embodiments, the yields of the swaths of the plant material is calculated based on a current setting of the header 100. The header 100 may include one or more features that are adjustable to customize operation of the header 100. The settings may be manually adjusted (e.g., by turning a crank or removing a fastener, etc.) or automatically adjusted by one or more actuators. The current setting may be manually reported by a user (e.g., as an input to the operator interface 40) or sensed (e.g., by a position sensor, by a force sensor, etc.).

In some embodiments, the setting includes a distance between the top roller 180 and the bottom roller 182 (i.e., a roll gap) of the conditioning system 140. Reducing the roll gap may increase the power required to move plant material through the header 100. Accordingly, a correction factor based on the roll gap of the header 100 may reduce the calculated yield as the roll gap decreases to account for the increased difficulty of passing plant material through the conditioning system 140.

In some embodiments, the setting includes a biasing force between the top roller 180 and the bottom roller 182 of the conditioning system 140. By way of example, a spring tension may bias the top roller 180 and the bottom roller 182 together, and the spring tension may be adjusted. Increasing the biasing force may increase the power required to move plant material through the header 100. Accordingly, a correction factor based on the biasing force may reduce the calculated yield as the biasing force increases to account for the increased difficulty of passing plant material through the conditioning system 140.

In some embodiments, the yields of the swaths of the plant material is calculated based on a position of a component of the vehicle 10. In some embodiments, the yields of the swaths of the plant material is calculated based on a position of a component of the header 100. In some such embodiments, the yields of the swaths of the plant material is calculated based on a position of the housing 150 (e.g., relative to the frame 12, relative to the ground, etc.). The position of the housing 150 may represent a position of the header 100. This position may be provided by the header position sensors 336. As the header 100 moves closer to the ground, the plant is severed closer to the ground, and a larger portion of the plant is fed through the header 100. Accordingly, lowering the header 100 may result in an increase in power required to drive the header 100. Depending upon the crop being harvested, lowering the header 100 may also increase the crop yield. The correction factor based on the position of the housing 150 of the header 100 may reduce or increase the calculated yields of the swaths of the plant material based on the determined position.

Additionally or alternatively, the yields of the swaths of the plant material may be calculated based on a position of the swath baffle 190 (e.g., relative to the housing 150). This position may be provided by the baffle position sensors 338. As the swath baffle 190 is lowered, the swath baffle 190 enters the path of the plant material and more severely deflects the plant material toward the ground. Accordingly, lowering the swath baffle 190 may increase the amount of power required to drive the header 100. The correction factor based on the position of the swath baffle 190 of the header 100 may reduce the calculated yields of the swaths of the plant material in response to lowering the swath baffle 190.

In some embodiments, the yields of the swaths of the plant material is calculated based on an amount of force applied to the swath baffle 190. As the flow rate of plant material through the header 100 increases, the force of the plant material contacting the swath baffle 190 increase. In some embodiments, this force is measured (e.g., using a strain gauge, based on a force applied by an actuator that positions the swath baffle 190 relative to the housing 150, etc.). A correction factor based on the force on the swath baffle 190 may increase the calculated yields of the swaths of the plant material as the force on the swath baffle 190 increases (e.g., based on an experimentally determined relationship between yield and the force on the swath baffle 190).

In some embodiments, the parameters of the swaths of the plant material is calculated based on a characteristic of the crop that is being formed into the swaths of the plant material by the vehicle 10. By way of example, the yield of the swaths of the plant material may be calculated based on the type of crop (e.g., hay, alfalfa, legumes, etc.). Different types of crop may require different amounts of power to cut, collect, condition, rake, merge, and/or turn. By way of another example, the height and/or the width of the swaths of the plant material may be calculated based on the type of crop. Different types of crops may rest differently on the ground, resulting in the swaths of the plant material being different heights and/or widths depending on the type of crop. By way of yet another example, the moisture content of the swaths of the plant material may be calculated based on the type of crop. Different types of craps may have different moisture contents, resulting in the swaths of the plant material having different moisture contents. The type of crop being formed into he swaths of the plant material may be provided by an operator (e.g., through the operator interface 40). A correction factor based on the type of crop being formed into the swaths of the plant material may reduce or increase the calculated parameters of the swaths of the plant material (e.g., based on an experimentally-determined relationship between yield and the load imparted on the header 100 by various crops, based on an experimentally-determined relationship between the various crops and the height and/or the wide of the swaths of the plant materials, based on different conditioning that is applied to the various crops, etc.).

In some embodiments, the parameters of the swaths of the plant material may be calculated based on a growth stage of a crop that is being formed into the swaths of the plant material. A user may decide to harvest a crop earlier or later in the growing cycle (e.g., due to the timing of favorable weather conditions for harvesting, etc.). The growth stage of the crop may be provided by an operator (e.g., through the operator interface 40). By way of example, the amount of power required to cut, collect, and/or condition the crop may vary throughout the growing cycle of the plant. A crop harvested early in the growing cycle of the plant may require less power to cut, collect, and/or condition the crop than a crop harvested late in the growing cycle of the plant. By way of another example, the moisture level in the crop may vary throughout the growing cycle of the plant. A crop harvested early in the growing cycle of the plant may have a higher moisture content than a crop harvested late in the growing cycle of the plant. A correction factor based on the current growth stage of the crop may reduce or increase the calculated parameters of the swaths of the plant material (e.g., based on an experimentally-determined relationship between yield and the load imparted on the header 100 by the crop at different growth stages, based on an experimentally-determined relationship between moisture content of the swaths of the plant material and the crop at different growth stages, etc.).

In some embodiments, the parameters of the swaths of the plant material may be calculated based on a cutting number of a crop that is being formed into the swaths of the plant material. Certain crops can be grown and harvested multiple times throughout a growing season. Different cuttings may have different properties (e.g., densities, fully-grown heights, moisture contents, etc.). By way of example, the first cutting may have unique properties that are different from subsequent cuttings. Accordingly, the cutting number of the crop may vary the parameters of the swaths of the plant material formed by the header 100. By way of example, the cutting number of the crop may vary the amount of power required to drive the header 100, which may be used to determine the calculated yield of the swaths of the plant material. By way of another example, the moisture level in the crop may vary based on the cutting number of the crop. The cutting number of the crop may be provided by an operator (e.g., through the operator interface 40). A correction factor based on the cutting number of the crop may reduce or increase the calculated parameters of the swaths of the plant material (e.g., based on an experimentally determined relationship between yield and the cutting number, based on an experimentally determined relationship between moisture content and the cutting number, etc.).

By way of another example, the yield may be calculated based on the moisture content of the crop that is being formed into the swaths of the plant material. Moisture content may change based on various factors (e.g., growth stage, the amount of precipitation received by the field, an amount of time conditioned etc.). By way of example, material having a higher moisture content may increase the load on the header 100, such that a larger amount of power is required to drive the header 100. The moisture content of the crop may be provided by an operator (e.g., through the operator interface 40) and/or measured using one or more sensors. A correction factor based on the moisture content of the crop may reduce or increase the calculated yield (e.g., based on an experimentally determined relationship between yield and the moisture content).

By way of another example, the parameters of the swaths of the plant material may be calculated based on an effective header width of the header 100. The effective header width may represent a portion of the header 100 that is actively harvesting plant material. By way of example, a header 100 may have a header width (e.g., measured laterally, perpendicular to the direction of movement of the vehicle 10) of 10 feet. If the section of plant material entering the header 100 is at least 10 feet wide, the entire width of the header 100 will be utilized to harvest the plant material, and the effective header width will be 10 feet or 100% of the header width. If the section of plant material entering the header 100 is 8 feet wide, only 8 feet of the header 100 will be utilized to harvest the plant material, and the effective header width will be 8 feet or 80% of the header width. By way of example, an effective header width of less than 100% of the header width will reduce the load on the header 100. By way of another example, an effective header width of less than 100% if the header width will reduce the width and/or the height of the swaths of the plant material. A correction factor based on the effective header width may reduce or increase the calculated parameters of the swaths of the plant material (e.g., based on an experimentally determined relationship between yield and the effective header width, based on an experimentally determined relationship between the width and/or height of the swaths and the effective header width, etc.).

In some embodiments, the effective header width is measured by a sensor (e.g., a crop width sensor provides crop width data). By way of example, the cameras 340 may capture image data of an area forward of the header 100. The area may include a section of plant material that is about to enter the header 100. The vehicle controller 310 may perform image recognition on the image data (e.g., based on a predetermined relationship between an amount of pixels and a real-world distance) to determine a width of the section of plant material about to enter the header 100.

In some embodiments, the effective header width is determined based on the location of the vehicle 10 (e.g., as provided by the location sensors 320). By way of example, the vehicle controller 310 may record a navigation path of the vehicle 10 as the vehicle 10 moves throughout the field. Based on the navigation path and a predetermined width of the header 100, the vehicle controller 310 may determine which areas of the field have been harvested and which areas of the field have not yet been harvested. Using the current location and/or movement direction of the vehicle 10, the vehicle controller 310 may determine an area of the field that the header 100 is currently attempting to harvest. The vehicle controller 310 may compare the area of the field that the header 100 is currently attempting to harvest with the areas of the field have or have not been harvested to determine the width of the section of the plant material that is entering the header.

### C. Use of Calculated Parameters of Swaths

As the vehicle 10 operates to form the swaths of the plant material the plant material in a field, the control system 300 may periodically retrieve data to calculate parameters of swaths of the plant material formed by the header 100 at locations (e.g., multiple locations, etc.) throughout the field. The control system 300 associates each of the calculated parameters of the swaths of the plant material with the corresponding location in the field where the swaths are positioned. By way of example, the control system 300 may associate a first set of calculated parameters of a first swath of the plant material with a corresponding first location in the field and a second set of calculated parameters of a second swath of the plant material with a corresponding second location in the field. In order to determine this location, the control system 300 may utilize data from the location sensors 320. The location and calculated parameter pairs may be stored by the control system 300 (e.g., in the memory 314, in the memory 364, in the memory 374, etc.). In some embodiments, the control system 300 generates the location and calculated parameter pairs in real time as the header 100 forms the swaths of the plant material. In other embodiments, the control system 300 generates the location and calculated parameters pairs after the vehicle 10 has finished forming the swaths of the plant material in the field. The control system 300 may then use these data pairs to generate a parameter map of the field outlining the calculated parameters of the swaths of the plant material positioned around the field.

In some embodiments, the control system 300 associates the calculated parameters of the swaths of the plant material with the locations throughout the field using a point cloud associated with the field. The point cloud may include a plurality of location data points each representing a location in the field. By way of example, each of the location data points may be represented with X and Y coordinates with reference to an origin point (e.g., a reference point, etc.) associated with one of the locations of the field (e.g., an origin location, a reference location, etc.). The origin point may be associated with a corner of the field, a center of the field, or any other location in the field (e.g., a location with a maximum altitude, a location with a landmark, etc.). As another example, each of the location data points may include a reference to a global position of a GPS that provide the global position of each of the locations of the field associated with the location data points. The control system 300 may associate one of the calculated parameters of the swaths of the plant material with each of the location data points in the point cloud to generate a parameter point cloud that includes the location and calculated parameter pairs for each of the location data points that can be used to generate the parameter map of the field (e.g., utilizing data from the location sensors 320, etc.). In various embodiments, the control system 300 attaches other data to each of the location data points such as altitudes, slope angles, or other relevant data received the sensors of the vehicle 10 or other data sources (e.g., the memory 364, the memory 374, etc.).

In some embodiments, the control system 300 associates the calculated parameters of the swaths of the plant material with the locations throughout the field using global positions of the locations. The global positions may be global coordinates of the locations in the field based on a GPS (e.g., a global navigation satellite system, etc.). By way of example, the control system 300 may associated the calculated parameters of each of the swaths of the plant material with a global position using global positioning coordinates to generate the location and calculated parameter pairs that can be used to generate the parameter map of the field.

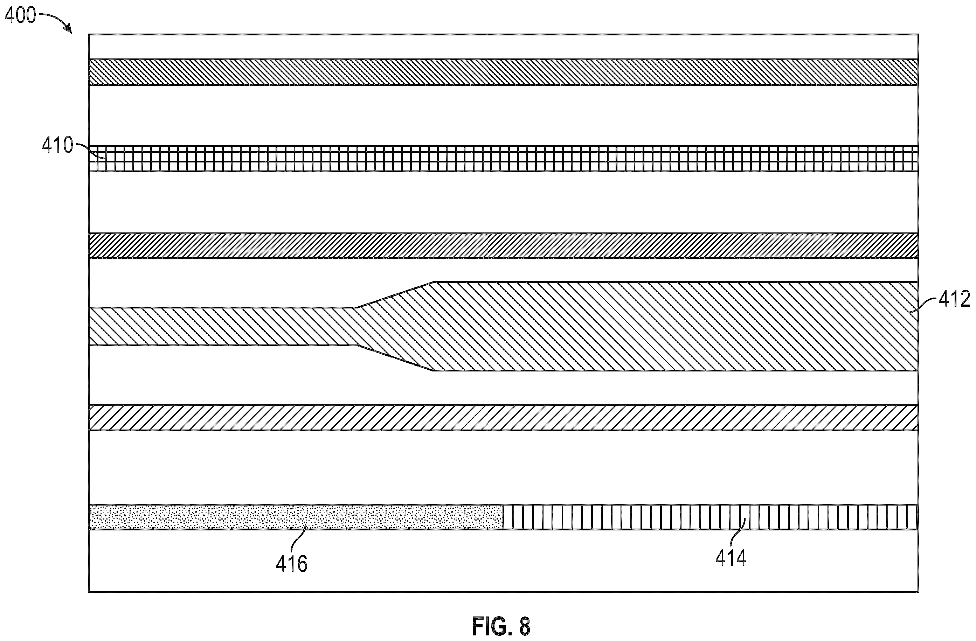

Referring to FIG. 8, a swath parameter map 400 is shown according to an exemplary embodiment. The swath parameter map 400 may be provided to a user as part of a graphical user interface (GUI) (e.g., displayed on the operator interface 40, displayed on the user interface 376, etc.). The swath parameter map 400 may be generated by the control system 300 using the location and calculated parameter pairs that were generated based on the point cloud of the field or the global positions of the locations in the field. The swath parameter map 400 includes a series of areas or zones, each associated with a swath of the plant material formed by the header 100. The swath parameter map 400 may visually indicate the calculated parameters of the swaths of the plant material. By way of example, a color scale (e.g., from green to red) may indicate the relative yield of each of the swaths of the plant material. By way of another example, the moisture content of each of the swaths of the plant material may be indicated numerically. By way of yet another example, a width and/or a height of each of the swaths of the plant material may be indicated by shapes on the swath parameter map 400. A first swath of the plant material with a first width may be displayed as a first shape with a first width and a first swath of the plant material with a second width that is greater than the first width may be displayed as a second shape with a second width that is larger than the first width of the first shape.

In some embodiments, the swaths of the plant material may be determined based on differences in the parameters of the swaths of the plant material being above a difference threshold. Each of the swaths of the plant material may include multiple of the location and calculated parameters pairs generated by the control system 300 based on the locations and/or the calculated parameters. By way of example, the control system 300 may separate a first portion of the plant material into a first swath and a second portion of the plant material into a second swath based on a difference between the parameters of the first swath and the second swath being greater than the difference threshold. In some embodiments, the swaths of the plant material may be determined based on a length of each of the swaths of the plant material. By way of example, the control system 300 may separate the plant material into a number of swaths with even lengths. The control system 300 may determine the parameters of each of the swaths of the plant material by averaging the parameters of the plant material in each of the swaths. In various embodiments, the swaths of the plant material may be determined based on the passes of the vehicle 10 across the field. By way of example, the controller may separate the plant material processed by the header 100 during a first pass of the vehicle 10 across the field into a first swath, the plant material processed by the header 100 during a second pass of the vehicle 10 into a second swath, and the plant material processed by the header 100 during a third pass of the vehicle 10 into a third swath. In various embodiments, the control system 300 may use a combination of the methods discussed above in order to separate the plant material processed by the header 100 into the various swaths formed by the header 100. By way of example, the control system 300 may generally separate the plant material into different swaths based on variations in the parameters of the swaths of the plant materials being above the difference threshold, but may also separate the plant material into different swaths based on a distance threshold being reached prior to the difference threshold being reached to ensure a sufficient data resolution in the parameters of the swaths of the plant material.

Based on a visual inspection of the swath parameter map 400, a farmer may quickly and easily identify parameters of the swaths of the plant material formed by the header 100, as well as the relative differences in the parameters of the swaths of the plant material (e.g., swaths with extremely low or extremely high yield, swaths with extremely low or extremely high widths, swaths with extremely low or extremely high moisture content, swaths with extremely low or extremely high conditioning, etc.). Using the swath parameter map 400, the farmer may quickly and easily determine a strategy for gathering the swaths of the plant material. By way of example, the farmer may plan a route for a baler to gather and bale the swaths of the plant material to form bales for storage and/or transportation.

As shown, the swath parameter map 400 includes swaths 410, 412, 414, 416, each being a swath of the plant material having a different swath parameters. By way of example, the swath 410 may be a under conditioned swath (e.g., a swath of the plant material with a lower conditioning, a swath of the plant material that is less conditioned than other swaths, etc.). The swath 412 may be a wide swath (e.g., a swath of the plant material that is wide, a swath of the plant material that is wider than other swaths, etc.). The swath 414 may be a low moisture swath (e.g., a swath of the plant material with a lower moisture, a swath of the plant material that has a lower moisture than other swaths, etc.). The swath 416 may be a high moisture swath (e.g., a swath of the plant material with a higher moisture, a swath of the plant material with a higher moisture than other swaths, etc.). In some embodiments, the swath parameter map 400 illustrates obstructions in the field. By way of example, the swath parameter map 400 may illustrate roads, trees, rocks, water features, or other areas where no swaths of plant material are positioned. The locations, shapes, and sizes of obstacles may be predetermined and stored by the control system 300.

The control system 300 may examine the swath parameter map and provide recommendations associated with the swaths of the plant material in the field. By way of example, the calculated parameters of the swaths of the plant material may indicate that a configuration of a vehicle is needed to gather the swaths of the plant material. The configuration of the vehicle may include a baler with an intake width that is greater than the largest width of the swaths of the plant material, a baler with an intake height that is greater than the largest height of the swaths of the plant material, a baler configured to gather the swaths of the plant material based on the conditioning of the plant material, etc. By way of another example, the control system 300 may provide a schedule for gathering the swaths of the plant material based on the parameters of the swaths of the plant material. The schedule may be based on the moisture content of the swaths of the plant material and/or the location of the swaths of the plant material. If the calculated parameters of the swaths of the plant material indicates that a first swath of the plant material has a moisture content of 15% and a second swath of the plant material has a moisture content of 17%, the control system 300 may recommend gathering the first swath of the plant material before gathering the second swath of the plant material to allow for the moisture content of the second swath of the plant material to further decrease. Additionally or alternatively, if the calculated parameters of the swaths of the plant material indicates that the moisture content of a first swath of plant material and a second swath of the plant material are the same and that the first swath of the plant material is located in the shade (e.g., from a tree near the field, etc.), the control system 300 may recommend gathering the second swath of the plant material before the first swath of the plant material since the moisture content of the first swath of the plant material will decrease at a slower rate.

In some embodiments, the control system 300 may example swath parameter maps of a plurality of fields and provide recommendations associated with each of the fields. By way of example, if comparing a first swath parameter map associated with a first field with a second swath parameter map associated with a second field indicates that a first moisture content of the swaths of the plant material in the first field is higher than a second moisture content of the swaths of the plant material in the second field, the control system 300 may provide a recommendation to gather the swaths of the plant material in the second field before gathering the swaths of the plant material in the first field so that the swaths of the plant material in the first field have longer to dry.

The control system 300 may examine the swath parameter map to generate a recommended route for the vehicle 10 or other vehicles (e.g., balers) to navigate through the field. By way of example, the calculated parameters of the swaths of the plant material may be used to generate target paths for the balers that will collect the plant material. The target paths may be based on the yields of the swaths of the plant material, the locations of the swaths of the plant material, the moisture content of the swaths of the plant material, the size of the swaths of the plant material, the conditioning of the swaths of the plant material, or any of the other calculated parameters of the swaths of the plant material. The recommended routes for the vehicle 10 or the other vehicles may include angled sections (e.g., corner sections, etc.) of the swaths of the plant material that may otherwise be difficult to determine (e.g., difficult to determine by the vehicle 10 gathering the swaths of the plant material, etc.).

The recommended routes may additionally or alternatively be based on the configurations of the vehicle 10 or the other vehicles. The configurations may include capacities (e.g., an amount of the plant material that each of the vehicles can hold, etc.), intake widths (e.g., a maximum swath width that the vehicles can intake, etc.), intake height (e.g., a maximum swath height that the vehicles can intake, etc.), or other information (e.g., engine power, experience of an operator of the vehicles, etc.). By way of example, if a farmer has a first harvest vehicle (e.g., a first baler, etc.) configured to intake swaths of plant material with a first maximum width (e.g., a parameter threshold, etc.) and a second harvest vehicle (e.g., a second baler, etc.) configured to intake swaths of plant material with a second maximum width that is greater than the first maximum width, the control system 300 may generate a first recommendation of a first route for the first vehicle that gathers the swaths of the plant material in the field with widths that are less than or equal to the first maximum width and a second recommendation of a second route for the second vehicle that gathers the swaths of the plant material in the field with widths that are greater than the first maximum width. By providing recommended routes for the vehicle 10 or the other vehicles to navigate through the field, the control system 300 may allow for the farmer to efficiently plan future operations in the field based on the calculated parameters of the swaths of the plant material.

The control system 300 may examine the swath parameter map and recommend additional operations be performed on certain of the swaths of the plant material. The additional operations may include turning over the swaths of the plant material (e.g., rotating, raking, etc.), harvesting (e.g., gathering, collecting, etc.) the swaths of the plant material, humidifying (e.g., watering, etc.) the swaths of the plant material, or other operations associated with the swaths of the plant material. By way of example, if a moisture content of a swath of the plant material is above a parameter threshold associated with moisture content, the control system 300 may recommend turning over the swath of the plant material to increase a rate of evaporation of moisture contained in the swath of the plant material.

In some embodiments, the control system 300 of the other of the vehicles 10 (e.g., a second control system that includes a second controller, etc.), is configured to generate gathering data based on the location and calculated parameter pairs received from the vehicle 10 that formed the swaths of the plant material. By way of example, the control system 300 of the other of the vehicles 10 may receive the swath parameter map from the control system 300 of the vehicle 10 (e.g., via the network, via a USB memory stick, etc.) and may generate any of the recommendations or routes discussed above for the other of the vehicles 10. The control system 300 of the other of the vehicles 10 may incorporate information associated with the other of the vehicles 10 such as a configuration, technical specifications, engine ratings, or other information associated with the other of the vehicles 10.

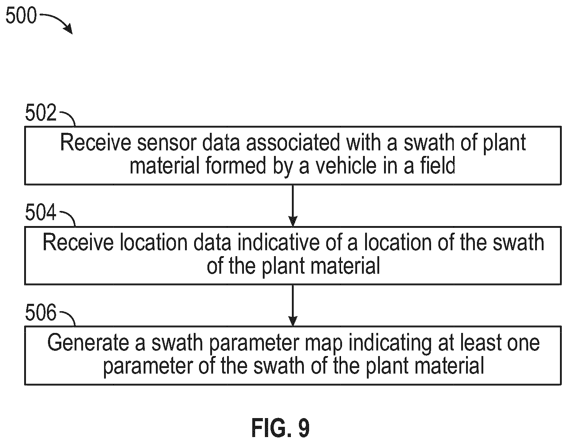

Referring to FIG. 9, a flow diagram of a process 500 (e.g., a method, etc.) for generating a swath parameter map (e.g., a method of generating a swath parameter map, etc.) includes steps 502-506, according to some embodiments. In some embodiments, the process 500 is performed by the vehicle controller 310 based on data obtained from one or more of the sensors of the vehicle 10 to obtain the swath parameter map. In various embodiments, the process 500 is performed by the server 360 based on data obtained from one or more of the sensors of the vehicle 10, by the user device 370 based on data obtained from one or more of the sensors of the vehicle 10, by the vehicle controller 310 of another of the vehicles 10 based on data obtained from one or more of the sensors of the vehicle 10, etc.

In step 502, the process 500 includes receiving sensor data associated with a swath of plant material formed by a vehicle in a field, according to some embodiments. The sensor data may be associated with at least one parameter of the swath of the plant material. In some embodiments, the processor 312 of the vehicle controller 310 receives the sensor data from at least one of the sensors of the vehicle 10. In other embodiments, the server 360 and/or the user device 370 receive the sensor data from the sensors of the vehicle 10 (e.g., via the network 350, via a USB, etc.).

In step 504, the process 500 includes receiving location data indicative of a location of the swath of the plant material, according to some embodiments. The location data may be indicative of a global position of the swath of the plant material (e.g., using a Global Navigation Satellite System, etc.) and/or may be indicative of a point of a point cloud corresponding to the field. In some embodiments, the processor 312 of the vehicle controller 310 receives the location data from the location sensor 320 of the vehicle 10. In other embodiments, the server 360 and/or the user device 370 received the location data from the location sensor 320 of the vehicle 10.

In step 506, the process 500 includes generating a swath parameter map indicating at least one parameter of the swath of the plant material, according to some embodiments. In some embodiments, the swath parameter map is generated based on the sensor data received in step 502 and the location data received in step 504. The swath parameter map may be generated by associating the sensor data associated with the at least one parameter of the swath of the plant material with the location indicated by the location data. By way of example, the swath parameter map may visually indicate the at least one parameter of the swath of the plant material and a corresponding location of the swath of the plant material. In some embodiments, the process 500 includes providing the swath parameter map to a user as part of a graphical user interface (GUI). In some embodiments, the process 500 includes providing the swath parameter map to a harvesting vehicle to be used when harvesting the swath of the plant material.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other exemplary embodiments, and that such variations are intended to be encompassed by the present disclosure.

The hardware and data processing components used to implement the various processes, operations, illustrative logics, logical blocks, modules, and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the vehicle 10 and the systems and components thereof (e.g., the driveline 50, the header 100, the control system 300, etc.) as shown in the various exemplary embodiments is illustrative only. Additionally, any element disclosed in one embodiment may be incorporated or utilized with any other embodiment disclosed herein.

## Claims

1. A method of generating a swath parameter map (400) of a field worked by an agricultural vehicle (10), the method comprising:
receiving, from a sensor of the agricultural vehicle (10), sensor data associated with at least one parameter of a swath (410, 412, 414, 416) of a plant material formed by the agricultural vehicle (10) in the field;
receiving, from a location sensor (320), location data indicative of a location of the swath (410, 412, 414, 416) of the plant material; and
generating, based on the sensor data and the location data, the swath parameter map (400) indicating the at least one parameter of the swath (410, 412, 414, 416) of the plant material at the location of the swath (410, 412, 414, 416) of the plant material.

2. The method of claim 1, wherein prior to generating the swath parameter map (400), the method further comprises:
associating, using the location data, the at least one parameter of the swath (410, 412, 414, 416) of the plant material with at least one point of a point cloud corresponding to the field; and
wherein the swath parameter map (400) is generated based on the point cloud.

3. The method of claim 2, wherein the at least one parameter of the swath (410, 412, 414, 416) of the plant material is associated the at least one point of the point cloud by matching a global position associated with the at least one point of the point cloud with the global position of the location of the swath (410, 412, 414, 416) of the plant material.

4. The method of claim 2, wherein the at least one parameter of the swath (410, 412, 414, 416) of the plant material is associated with the at least one point of the point cloud by comparing the location of the swath (410, 412, 414, 416) of the plant material to a reference location of the field.

5. The method of claim 1, further comprising:
providing the swath parameter map (400) to a vehicle configured to perform an operation associated with the swath (410, 412, 414, 416) of the plant material.

6. The method of claim 5, further comprising:
operating the vehicle to perform the operation associated with the swath (410, 412, 414, 416) of the plant material based on the swath parameter map (400).

7. The method of claim 1, wherein the at least one parameter of the swath (410, 412, 414, 416) of the plant material includes at least one of a moisture content of the swath (410, 412, 414, 416) of the plant material, a shape of the swath (410, 412, 414, 416) of the plant material, or a conditioning of the swath (410, 412, 414, 416) of the plant material.

8. The method of claim 1, further comprising:
generating, based on the swath parameter map (400), a recommendation associated with harvesting the swath (410, 412, 414, 416)of the plant material.

9. The method of claim 1, wherein the swath parameter map (400) is a first swath parameter map (400) of a first field; and
wherein the method further comprises:
generating, based on comparing the first swath parameter map (400) of the first field with a second swath parameter map of a second field, a recommendation to harvest the second field prior to harvesting the first field.

10. The method of claim 1, further comprising:
generating, based on the swath parameter map (400), a recommended route for a vehicle to manipulate the swath (410, 412, 414, 416) of the plant material.

11. The method of claim 10, further comprising:
operating the vehicle along the recommended route to manipulate the swath (410, 412, 414, 416) of the plant material.

12. A non-transitory computer-readable medium having instructions stored thereon that, when executed by one or more processors (312), cause the one or more processors (312) to implement operations comprising:
receiving, from a sensor (322, 328, 330, 332, 334, 336, 338) of a first vehicle (10), sensor data associated with at least one parameter of a swath (410, 412, 414, 416) of a plant material formed by the first vehicle (10) in a field;
receiving, from a location sensor (320), location data indicative of a location of the swath (410, 412, 414, 416) of the plant material;
determining, based on the sensor data and the location data, the at least one parameter and the location of the swath (410, 412, 414, 416) of the plant material; and
providing the at least one parameter and the location of the swath (410, 412, 414, 416) of the plant material to a second vehicle (10) configured to perform an operation associated with the swath (410, 412, 414, 416) of the plant material.

13. The non-transitory computer-readable medium of claim 12, wherein the at least one parameter of the swath (410, 412, 414, 416) of the plant material includes at least one of a moisture content of the swath (410, 412, 414, 416) of the plant material, a shape of the swath (410, 412, 414, 416) of the plant material, or a conditioning of the swath (410, 412, 414, 416) of the plant material.

14. The non-transitory computer-readable medium of claim 12, wherein the operations further comprise:
generating, based on the at least one parameter and the location of the swath (410, 412, 414, 416) of the plant material, a recommended route for the second vehicle (10) to harvest the swath (410, 412, 414, 416) of the plant material.

15. A farming system comprising:
an agricultural vehicle (10) including:
a chassis (150);
a tractive element (78) coupled to the chassis;
a drive motor (72) configured to drive the tractive element (78) to propel the agricultural vehicle (10);
a manipulator (100) coupled to the chassis, the manipulator (100) configured to perform an operation associated with a plant material,
a sensor (322, 328, 330, 332, 334, 336, 338) configured to provide sensor data associated with at least one parameter of a swath (410, 412, 414, 416) of the plant material formed by the agricultural vehicle (10); and
a location sensor (320) configured to provide location data indicative of a current location of the agricultural vehicle (10); and
a controller (310) operatively coupled to the sensor (322, 328, 330, 332, 334, 336, 338) and the location sensor (320) and configured to:
determine, based on the sensor data and the location data, at least one first parameter associated with a first swath of the plant material at a first location; and
determine, based on the sensor data and the location data, at least one second parameter associated with a second swath of the plant material at a second location.
